# EUROPEAN PATENT APPLICATION

(11) **EP 1 039 570 A1**
(43) Date of publication of application: **27.09.2000**
(21) Application number: 99943264.4
(22) Date of filing: 10.09.1999
(51) Int. Cl.: H01M 10/40, H01M 6/16

(54) **NONAQUEOUS ELECTROLYTIC LIQUID AND SECONDARY BATTER WITH NONAQUEOUS ELECTROLYTIC LIQUID**

(30) Priority: 11.09.1998 JP 25872498
(71) Applicant: Mitsui Chemicals, Inc., Tokyo 100-6070 (JP); Sony Corporation, Tokyo 141-0001 (JP)
(72) Inventor: HAYASHI, Takashi, Mitsui Chemicals Inc., Sodegaura-shi, Chiba 299-0265 (JP); TAN, Hiroaki, Mitsui Chemicals Inc., Sodegaura-shi, Chiba 299-0265 (JP); ITO, Hidetoshi, Sony Corporation, Tokyo 141-0001 (JP); OMARU, Atsuo, Sony Energytec Inc., Koriyama-shi, Fukushima 963-0531 (JP); NAGAMINE, Masayuki, Sony Energytec Inc., Koriyama-shi, Fukushima 963-0531 (JP)
(74) Representative: Cresswell, Thomas Anthony
(86) International application number: JP9904932
(87) International publication number: WO0016427

(57) **Abstract**

A non-aqueous electrolytic solution showing excellent safety and electrical properties, which contains a fluorine-containing ether compound represented by the following general formula (1) or (2),

RO-(AO)ₙ-CH₂-X (1)

X-CH₂-(AO)ₙ-CH₂-X (2)

wherein R represents a C₁₋₂₀ hydrocarbon group; X represents a C₁₋₁₀ fluorine-substituted hydrocarbon group; A represents a C₂₋₄ alkylene group ; and n is a whole number of 1 to 30, and a secondary battery with the non-aqueous electrolytic solution.

## Description

### TECHNICAL FIELD

The invention relates to a non-aqueous electrolytic solution that contains an ether compound containing fluorine, more specifically a non-aqueous electrolytic solution that provides a non-aqueous electrolytic solution secondary battery exhibiting high safety and excellent charging/discharging properties.

Furthermore, the invention relates to a non-aqueous electrolytic solution secondary battery containing such non-aqueous electrolytic solution.

### CONVENTIONAL TECHNOLOGY

In recent years, research has been done actively in secondary batteries making use of the oxidation reduction reaction of alkali metal or the doping and dedoping reaction of alkali metal ions as high-energy-density secondary batteries. Especially a battery which uses a carbon material capable of doping and dedoping lithium ions for the negative electrode and a complex oxide of lithium and metal for the positive electrode are called the lithium ion battery. Because of its small size, lightness and high energy density, the lithium ion battery is finding a sharply expanding application areas. In the meantime, while there have been new portable electronic devices coming into being one after another, such as VTR with a built-in camera, cellular phones and laptop computers, there has been a growing demand for improvements to be made in the performance of the lithium ion battery, including higher energy density and higher output so that a further improvement in the functions of those portable electronic devices is made.

Those secondary batteries utilizing the reaction of alkali metal ions whose representative example is the lithium ion battery show a great potential difference between positive and negative electrodes and cannot use any electrolytic solution using water as the solvent. Because of this, a so-called non-aqueous electrolytic solution with alkali meal salt dissolved in a non-aqueous solvent is used for those secondary batteries.

As such non-aqueous solvent, polar organic solvents that dissolve alkali metal salt easily and are stable electrochemically are used. Representative examples of such polar organic solvents include carbonic acid esters such as ethylene carbonate, propylene carbonate, dimethyl carbonate, methylethyl carbonate and diethyl carbonate, esters such as γ-butyrolactone, methyl formate, methyl acetate and methyl propionate, and ethers such as dimethoxyethane, tetrahydrofurane and dioxolane. Moreover, examples of alkali metal salt which is dissolved include lithium salts such as LiPF₆, LiBF₄, LiN(CF₃SO₂)₂, LiClO₄ and LiCF₃SO₃.

It is desirable that such non-aqueous electrolytic solution should have high ion conductivity and low viscosity so that the discharging performance of the battery using the non-aqueous electrolytic solution will be improved. It is also desirable that such non-aqueous electrolytic solution should be stable chemically and electrochemically against the positive and negative electrodes so that the performance of the battery using the non-aqueous electrolytic solution will not decline when the charging and discharging of the battery is repeated.

Furthermore, the non-aqueous electrolytic solution is required not to burn readily so that the safety of the battery is secured. To this end, the addition of phosphoric ester to the non-aqueous electrolytic solution (Japanese Laid-open Patent Application HEI 8-22839) and the use of a halogen compound (Japanese Laid-open Patent Application SHO 63-248072) have been proposed. The use of a chemically-stable fluorine-containing alkoxyethanes as the electrolytic solution solvent of the lithium battery has also be proposed (Japanese laid-open Patent Application HEI 1-117838).

Further, the lithium battery is generally equipped with a protective circuit so that there will be no abnormal release of heat due to the malfunctioning of the battery such as an external short circuit and overcharging. However, if any abnormal release of heat can be prevented by controlling the chemical reaction itself between electrolytic solution and electrodes, the safety of the battery will be improved. Consequently, reducing the reactivity between electrolytic solution and electrodes provides an effective means for improving the safety of the battery.

In view of the circumstances as described above, the inventors made a serious study to resolve the above issue of improving the safety of the battery and completed the invention after finding that there is a correlation between the reactivity of electrolytic solution and electrodes and the heat release rate of the reaction, and that it is possible to reduce the heat release rate by use of a non-aqueous solvent containing a particular fluorine-containing ether compound.

The invention is intended to provide a non-aqueous electrolytic solution showing excellent safety and battery properties and a non-aqueous electrolytic solution secondary battery containing this non-aqueous electrolytic solution.

The invention provides a non-aqueous electrolytic solution containing a fluorine-containing ether compound and a non-aqueous electrolytic solution secondary battery containing this non-aqueous electrolytic solution.

### DISCLOSURE OF THE INVENTION

The non-aqueous electrolytic solution of the invention comprises a non-aqueous solvent containing a fluorine-containing ether compound represented by the following general formula (1) or (2), and an electrolyte:

RO-(AO)ₙ-CH₂-X (1)

X-CH₂-(AO)ₙ-CH₂-X (2)

(In formulas (1) and (2), R represents a hydrocarbon group having 1 to 20 carbon atoms; X represents a fluorine atom-substituted hydrocarbon group having 1 to 10 carbon atoms; and A represents an alkylene group having 2 to 4 carbon atoms. Furthermore, n is a whole number of 1 to 30.)

Furthermore, it is desirable that the aforesaid non-aqueous electrolytic solution should contain cyclic carbonic add ester and/or chain carbonic add ester, and it is also desirable that the aforesaid cyclic carbonic acid ester should be a cyclic carbonic add ester compound containing an alkylene group having 2 to 5 carbon atoms and the aforesaid chain carbonic acid ester should be a chain carbonate compound containing a hydrocarbon group having 1 to 5 carbon atoms.

Moreover, it is desirable that the electrolyte should be at least one selected from the group of LiPF₆, LiBF₄, LiOSO₂R¹, LiN(SO₂R²)(SO₂R³), LiC(SO₂R⁴)(SO₂R⁵)(SO₂R⁶) and LiN(SO₂OCH₂R⁷)(SO₂OCH₂R⁸) (wherein R¹ to R⁸, which may be equal or different, are perfluoroalkyl groups having 1 to 6 carbon atoms).

The non-aqueous electrolytic solution secondary battery of the invention comprises the aforesaid non-aqueous electrolytic solution, a negative electrode which contains any of metal lithium, lithium-containing alloy, carbon material capable of doping or dedoping lithium ions, tin oxide capable of doping or dedoping lithium ions, silicon capable of doping or dedoping lithium ions and titanium oxide capable of doping or dedoping lithium ions as the active negative electrode material, and a positive electrode which contains a complex oxide of lithium and transition metal as the active positive electrode material.

### BRIEF DESCRIPTION OF THE DRAWINGS

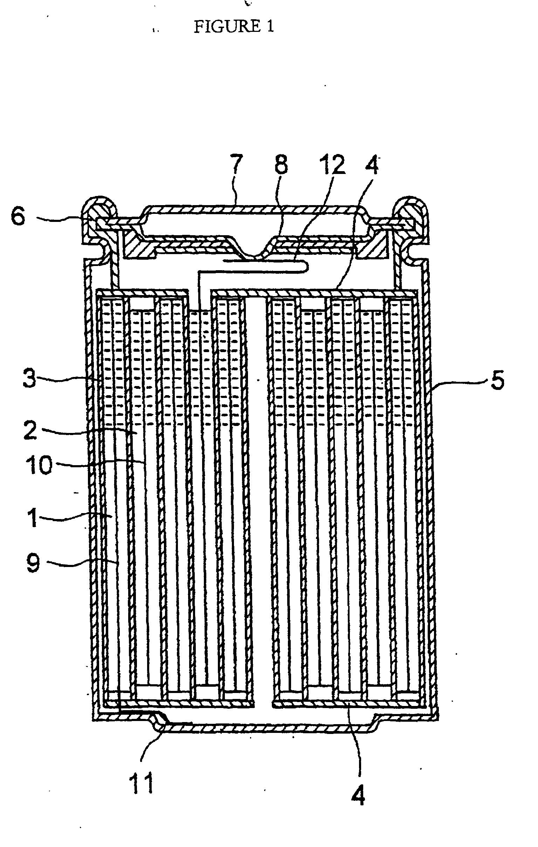

Fig. 1 is a schematic cross-sectional view showing the non-aqueous electrolytic solution secondary battery representing of the present invention.

### SPECIFIC EMBODIMENTS OF THE INVENTION

Given below is a specific explanation of the non-aqueous electrolytic solution and non-aqueous electrolytic solution secondary battery of the invention.

### [Non-aqueous Electrolytic Solution]

The non-aqueous electrolytic solution of the invention comprises a non-aqueous solvent containing a fluorine-containing ether compound as the indispensable component, and an electrolyte.

First, the components of the non-aqueous electrolytic solution are explained below.

### [Fluorine-containing Ether Compound]

In the invention, a compound represented by the following general formula (1) or (2):

RO-(AO)ₙ-CH₂-X (1)

X-CH₂-(AO)n-CH₂-X (2)

(In formulas (1) and (2), R represents a hydrocarbon group having 1 to 20 carbon atoms; X represents a fluorine atom-substituted hydrocarbon group having 1 to 10 carbon atoms; and A represents an alkylene group having 2 to 4 carbon atoms. Furthermore, n is a whole number of 1 to 30.)

As the hydrocarbon group having 1 to 20 carbon atoms, an alkyl group having 1 to 20 carbon atoms and an aryl group having 6 to 20 carbon atoms can be cited. Specifically methyl group(-CH₃), ethyl group(-C₂H₅), n-propyl group(-CH₂CH₂CH₃), isopropyl group(-CH(CH₃)₂), butyl group(-C₄H₉), phenyl group, p-t-butyl phenyl group, p-octyl phenyl group, p-nonyl phenyl group can be cited. Among them preferred are methyl group(-CH₃), ethyl group(-C₂H₅), n-propyl group(-CH₂CH₂CH₃), isopropyl group(-CH(CH₃)₂), p-octyl phenyl group and p-nonyl phenyl group

The fluorine-substituted hydrocarbon group having 1 to 10 carbon atoms is the group in which at least one hydrogen atom of a hydrocarbon group is substituted by fluorine atom. There can be cited as specific examples monofluoromethyl group(-CH₂F), difluoromethyl group(-CHF₂), trifluoromethyl group (-CF₃), 2-fluoroethyl group(-CH₂CH₂F), 2,2-difluoroethyl group (-CH₂CHF₂), 2,2,2-trifluoroethyl group (-CH₂CF₃), 1,1,1,2,2-pentafluoroethyl group (-CF₂CF₃), 3-fluoropropyl group (-CH₂CH₂CH₂F), 3,3,-difluoropropyl group(-CH₂CH₂CHF₂), 3,3,3-trifluoropropyl group(-CH₂CH₂CF₃), 2,2,3,3,3-pentafluoropropyl group (-CH₂CF₂CF₃), -(CF₂)₂-CF₃, -CH₂(CF₂)₃-CF₃, -CH₂(CF₂)₅CF₃, -(CH₂)₅CF₂CF₃, - (CH₂)₂(CF₂)₅CF₃, and -CH₂(CF₂)₇CF₃. Among them, preferred are monofluoromethyl group(-CH₂F), difluoromethyl group(-CHF₂), trifluoromethyl group(-CF₃), 2-fluoroethyl group(-CH₂CH₂F) and 1,1,1,2,2-pentafluoroethyl group(-CF₂CF₃).

As specific examples of the alkylene group, there can be cited -CH₂CH₂-, - CH₂CH(CH₃)-, -CH₂CH(CH₂CH₂)-, -CH₂CH₂CH₂-, -CH₂CH₂CH₂CH₂- and CH₂CH(CH₂OCH₃)-. Preferable examples are -CH₂CH₂- and -CH₂CH(CH₃)-. In the formula, n is a whole number of 1 to 30, preferably 1 to 10, more preferably 1 to 3.

As the fluorine-containing ether compound represented by the formula [1] and [2], there can be cited the following compounds.
CH₃O-CH₂CH₂O-CH₂CH₂F,
CH₃CH₂O-CH₂CH₂O-CH₂CH₂F,
CH₃O-CH₂CH₂O-CH₂CF₃,
CH₃CH₂O-CH₂CH₂O-CH₂CF₃,
CH₃O-CH₂CH(CH₃)O-CH₂CH₂F,
CH₃CH₂O-CH₂CH(CH₃)O-CH₂CH₂F,
CH₃O-CH₂CH(CH₃)O-CH₂CF₃,
CH₃CH₂O-CH₂CH(CH₃)O-CH₂CF₃,
CH₃O-(CH₂CH₂O)₂-CH₂CH₂F,
CH₃CH₂O-(CH₂CH₂O)₂-CH₂CH₂F,
CH₃O-(CH₂CH₂O)₂-CH₂CF₃,
CH₃CH₂O-(CH₂CH₂O)₂-CH₂CF₃,
FCH₂CH₂O-CH₂CH₂-OCH₂CH₂F,
CF₃CH₂O-CH₂CH₂-O-CH₂CF₃,
FCH₂CH₂O-CH₂CH(CH₃)-OCH₂CH₂F,
CF₃CH₂O-CH₂CH(CH₃)-O-CH₂CF₃,
CF₃CH₂O-(CH₂CH₂O)₂-CH₂CF₃,
FCH₂CH₂O-(CH₂CH₂O)₂-CH₂CH₂F,
CF₃CH₂O-(CH₂CH₂O)₂-CH₂CF₃,
FCH₂CH₂O-(CH₂CH(CH₃)O)₂-CH₂CH₂F,
CF₃CH₂O-(CH₂CH(CH₃)O)₂-CH₂CF₃,
C₉H₁₉-C₆H₄-O-CH₂CH₂O-CH₂CH₂F (-C₆H₄- stands for 1,4-phenylene group.),
C₉H₁₉-C₆H₄-O-CH₂CH₂O-CH₂CF₃ (-C₆H₄- stands for 1,4-phenylene group.),
C₉H₁₉-C₆H₄-O-CH₂CH(CH₃)O-CH₂CH₂F (-C₆H₄- stands for 1,4-phenylene group.),
C₉H₁₉-C₆H₄-O-CH₂CH(CH₃)O-CH₂CF₃ (-C₆H₄- stands for 1,4-phenylene group.),
C₉H₁₉C₆H₄OCH₂CH(CH₃)O-CH₂CF₃ (-C₆H₄- stands for 1,4-phenylene group),
C₉H₁₉-C₆H₄-O-(CH₂CH₂O)₂-CH₂CH₂F (-C₆H₄- stands for 1,4-phenylene group.), and
C₉H₁₉-C₆H₄-O-(CH₂CH₂O)₂-CH₂CF₃ (-C₆H₄- stands for 1,4-phenylene group.).

Out of these, preferable fluorine-containing ether compounds are
CH₃-CH₂CH₂O-CH₂CH₂F,
CH₃O-CH₂CH₂O-CH₂CF₃,
CH₃O-CH₂CH(CH₃)O-CH₂CH₂F,
CH₃O-CH₂CH(CH₃)O-CH₂CF₃,
FCH₂CH₂O-CH₂CH₂-OCH₂CH₂F,
FCH₂CH₂O-CH₂CH(CH₃)-OCH₂CH₂F,
CF₃CH₂O-(CH₂CH₂O)₂-CH₂CF₃,
CF₃CH₂O-CH₂CH(CH₃)-O-CH₂CF₃,
C₉H₁₉-C₆H₄-O-CH₂CH₂O-CH₂CF₃ (-C₆H₄- stands for 1,4-phenylene group.) and
C₉H₁₉-C₆H₄-O-CH₂CH(CH₃)O-CH₂CF₃ (-C₆H₄- stands for 1,4-phenylene group.).

The number of the fluorine atoms in the fluorine-containing ether compound is required to be at least not less than one, preferably 1 to 10, more preferably 1 to 6. The number of fluorine atoms being in a range of 1 to 10 offers the advantage of the fluorine-containing ether compound showing satisfactory compatibility with non-aqueous solvents such as cyclic carbonic add ester and chain carbonic add ester as described below.

Such fluorine-containing ether compound has the properties of being safe physically, being not readily decomposed thermally and being nonflammable and resistant to electrochemical oxidation and reduction.

### [Non-aqueous Solvents]

The aforesaid fluorine-containing ether compound may be used single as the non-aqueous solvent for the non-aqueous electrolytic solution. However, it may also be used as a mixed solvent with another non-aqueous solvent such as carbonic add ester In this case, it is desirable for the sake of improving the safety of the battery that the aforesaid fluorine-containing ether compound should be contained in the amount of 0.1 to 100 wt%, preferably 1 to 90 wt%, more preferably 20 to 70 wt%, in the non-aqueous solvent.

In the non-aqueous electrolytic solution of the invention, it is desirable for the sake of improving its ion conductivity that especially a mixed solvent containing the aforesaid fluorine-containing ether compound and cyclic carbonic add ester and/or chain carbonic add ester should be used.

### [Cyclic Carbonic Acid Ester]

As an example of the cyclic carbonic acid ester used in the invention, the carbonates represented by the following general formula (3) can be cited:

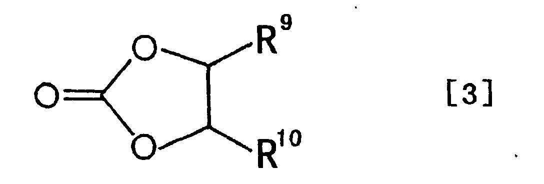

In the above formula, R⁹ and R¹⁰, which may be equal or different, represent hydrogen atom, a straight-chain, branched or cyclic alkyl group, or a halogen-substituted alkyl group having the aforesaid alkyl group any part or whole of the hydrogen of which has been substituted with at least one of chlorine and bromine.

As such straight-chain alkyl group, straight-chain alkyl groups having 1 to 4 carbon atoms such as the methyl group, ethyl group, propyl group and butyl group are preferable.

As such branched alkyl group, branched alkyl groups having 3 to 10 carbon atoms such as the isopropyl group, isobutyl group, sec-butyl group and tert-butyl group are preferable.

As such cyclic alkyl group, cyclic alkyl groups having 5 to 10 carbon atoms such as the cyclopentyl group, cyclohexyl group and 1-methyl-cyclohexyl group are preferable.

Furthermore, as such cyclic carbonic add ester, the 6-membered cyclic compound as well as the 5-membered cyclic compound represented by the aforesaid formula (3) may be used.

As such cyclic carbonic acid ester represented by the above formula [3], specifically there can be cited ethylene carbonate, propylene carbonate, 1,2-butylene carbonate, 2,3-butylene carbonate, 1,3-butylene carbonate, 2,4-pentylene carbonate, 1,3-pentylene carbonate and vinylene carbonate.

Moreover, a halogen-substituted cyclic carbonic add ester having a methyl group, such as the aforesaid propylene carbonic acid ester, any part or whole of the hydrogen of which has been substituted with at least any of fluorine, chlorine and bromine, may be used as such cyclic carbonic acid ester.

In the invention, cyclic carbonic acid esters containing an alkylene group having 2 to 5 carbon atoms, particularly ethylene carbonate and propylene carbonate, are preferable as the cyclic carbonic acid ester.

These cyclic carbonic acid esters may be used in a combination of two or more.

### [Chain Carbonic Acid Ester]

As an example of the chain carbonic acid ester, the carbonic acid esters represented by the following formula (4) can be cited:

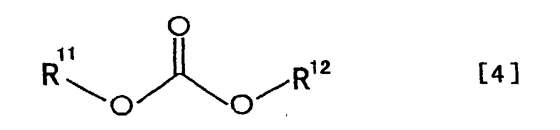

In the above formula, R¹¹ and R¹², which may be equal or different, represent a straight-chain, branched or cyclic alkyl group, or a halogen-substituted alkyl group having the aforesaid alkyl group any part or whole of the hydrogen of which has been substituted with at least any of fluorine, chlorine and bromine.

As such straight-chain alkyl group, straight-chain alkyl groups having 1 to 4 carbon atoms such as methyl group, ethyl group, propyl group and butyl group are preferable.

As such branched alkyl group, branched alkyl groups having 3 to 10 carbon atoms such as isopropyl group, isobutyl group, sec-butyl group and tert-butyl group are preferable.

As such cyclic alkyl group, cyclic alkyl groups having 5 to 10 carbon atoms such as cyclopentyl group, cyclohexyl group and 1-methyl-cyclohexyl group are preferable..

As such chain carbonic acid ester, specifically there can be cited dimethyl carbonate, diethyl carbonate, di-n-propyl carbonate, dibutyl carbonate, diisopropyl carbonate, methylethyl carbonate, etc.

Out of these chain carbonic acid esters, preferred are the chain carbonic acid esters having 1 to 15 carbon atoms, especially dimethyl carbonate, methylethyl carbonate, and diethyl carbonate.

### [Solvent Composition]

In the case of using the fluorine-containing ether compound or a mixed solvent of the fluorine-containing ether compound and the aforesaid cyclic carbonic acid ester and/or the chain carbonic acid ester as the non-aqueous solvent, it is desirable that the fluorine-containing ether compound should be contained in an amount of 0.1 to 100 wt%, preferably 1 to 90 wt%, especially preferably 20 to 70 wt%, in the non-aqueous solvent; and it is also desirable that the aforesaid cyclic carbonic add ester and/or chain carbonic acid ester should be contained in an amount of 0 to 99.9 wt%, preferably 10 to 99 wt%, especially preferably 30 to 80 wt%, in the non-aqueous solvent.

The non-aqueous electrolytic solution using the non-aqueous solvent of the composition as described above shows low reactivity between positive electrode and electrolytic solution, thus improving the safety of the battery. Specifically, the non-aqueous electrolytic solution containing the non-aqueous solvent of the composition as described above shows a decline of approximately not more than 1/10 in the maximum heat release rate when mixed with a positive electrode in a fully charged state, compared with the non-aqueous electrolytic solution containing no fluorine-containing ether compound.

Further, the maximum heat release rate represents the maximum heat release rate in exothermic reaction (the reaction between positive electrode and non-aqueous electrolytic solution in the invention). When the maximum heat release rate is measured under the same conditions, the rise in temperature is gentle and safe if the maximum heat release rate is low.

The maximum heat release rate is measured by use of the accelerating rate calorimeter (hereinafter referred to as "ARC"). Further, ARC is a technique for assessing the hazardousness of reactive chemical substances (Thermochimica Acta, 37(1980), 1-30). ARC is a technique in which a reactive substance is slowly heated, and when any heat of reaction released from the reactive substance is detected, the ambient temperature is raised to keep pace with the temperature rise of the reactive substance so that the reactive substance is put in a pseudo-thermally-insulated state, thereby faithfully reproducing the self-heat-release decomposition. Further, in the case of using the fluorine-containing ether compound or a mixed solvent of the fluorine-containing ether compound and the aforesaid cyclic carbonic acid ester and/or chain carbonic acid ester as the non-aqueous solvent in the invention, the ratio between the aforesaid cyclic carbonic acid ester and the aforesaid chain carbonic add ester is 0:100 to 100:0, preferably 20:80 to 80:20 (weight ratio).

### [Other Solvents]

The non-aqueous electrolytic solution of the invention may contain any solvents other than mentioned above as the non-aqueous solvent. As the other solvents, there can be cited cyclic esters such as γ-butyrolactone, γ-valerolactone, 3-methyl-γ-butyrolactone and 2-methyl-γ-butyrolactone; chain esters such as methyl formate, ethyl formate, methyl acetate, ethyl acetate, propyl acetate, methyl propionate, methyl butyrate and methyl valerate; cyclic ethers such as 1,4-dioxane, 1,3-dioxane, tetrahydrofuran, 3-methyl-1,3-dioxolane and 2-methyl-1,3-dioxolane; chain ethers such as 1,2-dimethoxy ethane, 1,2-diethoxy ethane, diethyl ether, dimethyl ether and dipropyl ether; sulfur-containing compounds such as sulforane and dimethyl sulfate; phosphorus-containing compounds such as trimethyl phosphate and triethyl phosphate.

These solvents can be used either individually, or in a combination of 2 or more. Furthermore, the electrolytic solution of the invention may be gelated by adding a high-molecular-weight gelling agent to it.

A preferable embodiment of the non-aqueous electrolytic solution comprises a non-aqueous solvent containing a fluorine-containing ether compound represented by the following general formula (1) or (2) and a carbonic acid ester, and an electrolyte:

RO-(AO)ₙ-CH₂-X (1)

X-CH₂-(AO)ₙ-CH₂-X (2)

(In formulas (1) and (2), R represents a hydrocarbon group having 1 to 20 carbon atoms; X represents a fluorine atom-substituted hydrocarbon group having 1 to 10 carbon atoms; and A represents an alkylene group having 2 to 4 carbon atoms. Furthermore, n is a whole number of 1 to 30.)

As another example of a preferable embodiment of the non-aqueous electrolytic solution of the invention, a non-aqueous electrolytic solution comprising a non-aqueous solvent containing a fluorine-containing ether compound represented by the following general formula (1) or (2), and an electrolyte, can be cited:

RO-(AO)ₙ-CH₂-X (1)

X-CH₂-(AO)ₙ-CH₂-X (2)

(In formulas (1) and (2), R represents a hydrocarbon group having 1 to 20 carbon atoms; X represents a fluorine atom-substituted hydrocarbon group having 1 to 10 carbon atoms; A represents an alkylene group having 2 to 4 carbon atoms; and n is a whole number of 1 to 30. Furthermore, in formula (1), when X is CF₃ and R is CH₃, C₂H₅ or CH(CH₃), A is an alkylene group having 3 or 4 carbon atoms.)

### [Electrolyte]

As the electrolyte used in the invention, any electrolytes may be used without being limited to any particular type, so long as they are normally used as the electrolyte for non-aqueous electrolytic solutions.

Specifically there can be cited lithium salts such as LiPF₆, LiBF₄, LiClO₄, LiAsF₆, LiAlCl₆, Li₂SiF₆, LiOSO₂R¹, LiN(SO₂R²)(SO₂R³), LiC(SO₂R⁴)(SO₂R⁵),(SO₂R⁶) and LiN(SO₂OCH₂R⁷)(SO₂OCH₂R⁸), wherein R¹-R⁸ stand for perfluoroalkyl groups having 1 to 6 carbon atoms which may be equal or different, and alkali metal salts formed by substitute lithium of the above lithium salts by an alkali metal.

Among these salts, preferred are LiPF₆, LiBF₄, LiOSO₂R¹, LiN(SO₂R²)(SO₂R³), LiC(SO₂R⁴)(SO₂R⁵),(SO₂R⁶) and LiN(SO₂OCH₂R⁷)(SO₂OCH₂R⁸).

It is desirable that such electrolyte should be contained in a concentration of normally 0.1 to 3.0 mol/liter, preferably 0.5 to 2.0 mol/liter, in the non-aqueous electrolytic solution.

### [Non-aqueous Electrolytic Solution Secondary Battery]

The non-aqueous electrolytic solution secondary battery of the invention comprises the aforesaid non-aqueous electrolytic solution, a negative electrode and a positive electrode.

A preferable example of such negative electrode is a negative electrode containing any of metal lithium, lithium-containing alloy, carbon material capable of doping or dedoping lithium ions, tin oxide capable of doping or dedoping lithium ions, silicon capable of doping or dedoping lithium ions and titanium oxide capable of doping or dedoping lithium ions as the active negative electrode material.

A preferable example of such positive electrode is a positive electrode containing a complex oxide of lithium and transition metal as the active positive electrode material.

Such non-aqueous electrolytic solution secondary battery may be applied to a non-aqueous electrolytic solution secondary battery of the cylindrical shape. Such non-aqueous electrolytic solution secondary battery of the cylindrical shape is so constructed that as shown in Fig. 1, Negative Electrode 1 comprising Negative Electrode Collector 9 coated with an active negative electrode substance and Positive Electrode 2 comprising Positive Electrode Collector 10 coated with an active positive electrode substance are wound via Separator 3 which is filled with the non-aqueous electrolytic solution and housed in Battery Can 5 with the Insulating Board 4 mounted on the top and bottom of the wound assembly. Battery Cover 7 is attached to Battery Can 5 by caulking it by means of Sealing Gasket 6, with each connected electrically to Negative Electrode 1 or Positive Electrode 2 via Negative Electrode Lead 11 and Positive Electrode Lead 12 so that each functions as the negative electrode and positive electrode of the battery. In this battery, Positive Electrode Lead 12 is so arranged that it is connected electrically to Battery Cover 7 via Current Shutoff Plate 8.

As such active negative electrode substance making up Negative Electrode 1, any of metal lithium, lithium alloy and carbon materials capable of doping and dedoping lithium ions reversibly may be used. Out of these, carbon materials capable of doping and dedoping lithium ions are preferable. For such carbon materials, either graphite or non-crystalline carbon may be used, and any carbon materials may be used including activated carbon, carbon fiber, carbon black and mesocarbon microbeads.

Further, examples of the substances that may be used as the active positive electrode substance making up Positive Electrode 2 include complex oxides comprising lithium and transition metal such as LiCoO₂, LiMnO₂, LiMn₂O₄, LiNiO₂ and LiNiₓCo₍₁₋ₓ₎O₂, and V₂O₆.

Moreover, the non-aqueous electrolytic solution secondary battery of the invention contains the non-aqueous electrolytic solution as explained above as an electrolytic solution, and the shape or form of the battery is not limited to the example shown in Fig. 1 and may be of the coil shape, the rectangular shape, etc.

### EXAMPLES

The invention will be understood more readily with reference to the following examples. However these examples are not to be construed to limit the scope of the invention.

### Example 1

### Preparation of a non-aqueous electrolytic solution:

A non-aqueous electrolytic solution was prepared by dissolving LiPF₆ in a non-aqueous solvent in which propylene carbonate (PC), dimethyl carbonate (DMC) and the fluorine-containing ether compound represented by the following formula (A) had been so blended that PC:DMC:fluorine-containing ether compound (weight ratio) is 15:15:70 in such manner that the LiPF₆ concentration was 1 mol/liter.

CH₃O-CH₂CH₂O-CH₂CH₂F Formula (A)

### Preparation of a positive electrode:

LiCoO₂, vinylidene fluoride resin and graphite were so blended that they were in a weight ratio of 91:3:6, brought into a slurry state by use of NMP and coated onto aluminum foil. After the coating was dried, a positive electrode was prepared. Using the positive electrode thus prepared, an Li negative electrode and an non-aqueous electrolytic solution charging in which LiPF₆ had been dissolved in a solvent containing propylene carbonate and dimethyl carbonate having been blended at a volume ratio of 1:1 in such manner that the LiPF₆ concentration was 1 mol/liter, constant-voltage charging at 4.4V was carried out. The electric potential after 2 hours from the charging was 4.38V. This electrode was washed adequately with dimethyl carbonic acid ester and dried for the removal of dimethyl carbonic acid ester.

This electrode was cut into an approximately 2-mm rectangular length, and thus a positive electrode for the measurement of maximum heat release rate was obtained.

The maximum heat release rate of the positive electrode was measured by the method as described below. Results are shown in Table 1.

### Measurement of maximum heat release rate:

0.3 ml of the non-aqueous electrolytic solution prepared as described above and 1.00 g of the positive electrode for the measurement of maximum heat release rate were mixed in an argon atmosphere.

The measurement was made by the normal method using ARCTM (accelerating reaction calorimeter) available from Columbia Scientific. The measurement temperature range was set at 40°C to 35°C.

Further, the heat release rate represents the temperature rise of the sample per unit time, and the maximum heat release rate represents the maximum value of the heat release rate in the measurement period.

### Preparation of a cylindrical battery:

A carbon material having properties dose to those of glass-like carbon was obtained by crosslinking petroleum pitch with oxygen and sintered it at 1,000°C in an inactive gas current. This carbon material was crushed, and the carbon material powder thus obtained was used as the active negative electrode material. A negative electrode compound was obtained by blending 90 wt% of the active negative electrode material and 10 wt% of vinylidene fluoride resin as the binder. This negative electrode compound was brought into a slurry state by dispersing it by using N-methylpyrrolidone as the solvent. Using copper foil in the strip form as the negative electrode collector, a negative electrode compound slurry was coated on both sides of the collector. After drying and removing the solvent, the collector was compress-molded, and as a result, Negative Electrode 1 was obtained.

A positive electrode compound was prepared by blending 91 wt% of LiCo₂ as the active positive electrode material, 6 wt% of graphite as the conductive material and 3 wt% of vinylidene fluoride resin as the binder and brought into a slurry state by getting it dispersed in N-methylpyrrolidone. Next, the positive electrode compound slurry thus obtained was coated on both sides of aluminum foil in the strip form which was the positive electrode collector. After the solvent was dried and removed, the collector was compression-molded, and as a result, Positive Electrode 2 was obtained.

Using porous polypropylene film as Separator 3 to be intervened between Negative Electrode 1 and Positive Electrode 2, which were prepared as described above, a four-layer laminate of Negative Electrode 1, Separator 3, Positive Electrode 2 and Separator 3 in this order was prepared. This laminate was wound many times in the form of vortex along the lengthwise direction in such manner that Negative Electrode 1 is positioned outside Positive Electrode 2. This wound object was fixed at the place of the wound end by means of adhesive tape comprising polyester film as the substrate on which silicone-based adhesive had been coated so that the wound object would not become loose. As a result, a wound electrode was obtained.

This wound electrode was put in Battery Can 5 made of nickel-plated iron. Electrical Insulator 4 was placed on both of the top and bottom of the wound electrode. In order to connect Negative Electrode 1 and Battery 5 electrically, Nickel Negative Electrode Lead 11 was taken out of the negative electrode collector and was welded to Battery Can 5. To connect Positive Electrode 2 and Battery Cover 7 electrically, Aluminum Positive Electrode 12 was taken out of the positive electrode collector and welded to Battery Cover 7. The non-aqueous electrolytic solution prepared as described above was poured into the battery case housing the wound electrode, and Current Shutoff Plate 8 and Battery Cover 7 were fixed by caulking the opening section of the battery case by means of Sealing Gasket 6 so that the inside of the battery would be air-tight. Through the process as described above, a cylindrical battery was prepared.

### External short-circuit test on the battery:

The cylindrical battery prepared as described above was charged for 7 hours at a constant current of 1A with the ceiling voltage set at 4.2V. After that, the positive electrode and the negative electrode was short-circuited by connecting Battery Cover 7 and Battery Can 5 by use of copper wire. The highest temperature of the battery that was reached due to the external short-circuit was measured by recording the change in the temperature of the outside walls of the battery at that time. Results are shown in Table 1.

### Examples 2 through 9

The non-aqueous electrolytic solution was prepared and maximum heat release rate was measured in the same manner as described in Example 1 except that the fluorine-containing ether compound shown in Table 1 was used. Results are shown in Table 1.

### Comparative Example 1

The non-aqueous electrolytic solution was prepared and maximum heat release rate was measured in the same manner as described in Example 1 except that the solvent having the composition shown in Table 1 was used. Results are shown in Table 1.

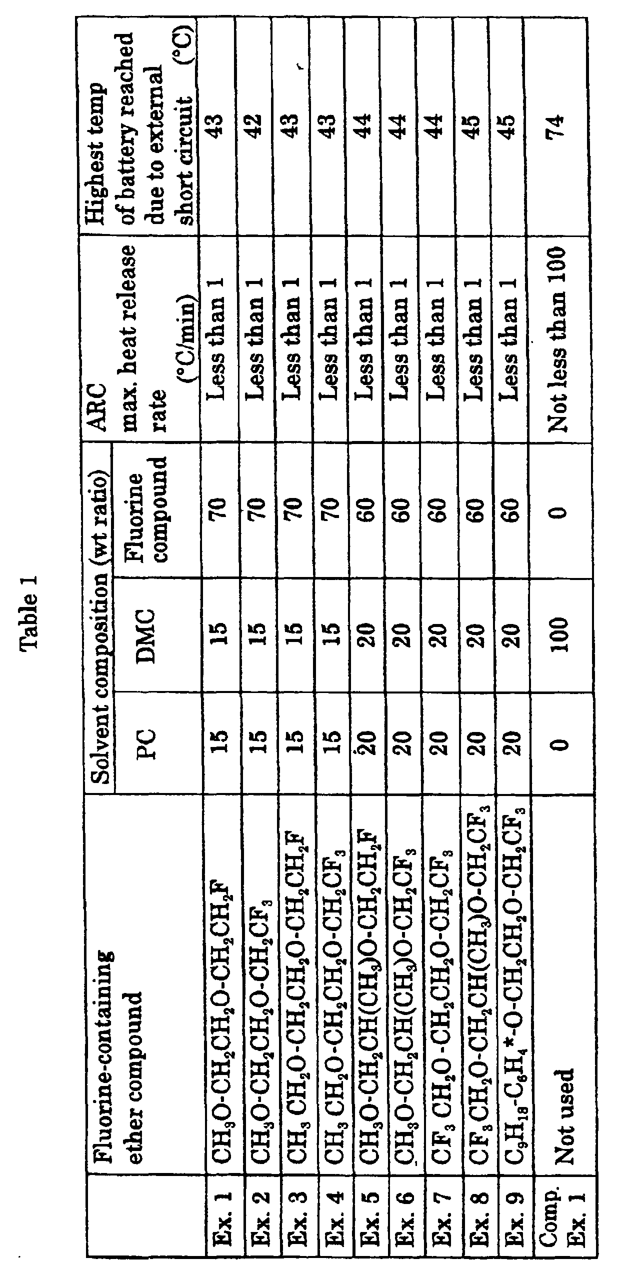

### POSSIBILITY OF INDUSTRIAL UTILIZATION

Since the non-aqueous electrolytic solution of the invention contains a fluorine-containing ether compound and uses a non-aqueous solvent of a particular composition, the rate of heat release due to the reaction between the electrolytic solution and the positive electrode is low, which implies excellent safety. Furthermore, such non-aqueous electrolytic solution shows a commercial level of ion conductivity, and yet entails no separation of the electrolyte.

This non-aqueous electrolytic solution can be used suitably as the electrolytic solution for lithium ion secondary batteries.

## Claims

1. A non-aqueous electrolytic solution comprising a non-aqueous solvent containing a fluorine-containing ether compound represented by the following general formula (1) or (2) and a carbonic acid ester, and an electrolyte:
RO-(AO)ₙ-CH₂-X (1)
X-CH₂-(AO)ₙ-CH₂-X (2)
(In formulas (1) and (2), R represents a hydrocarbon group having 1 to 20 carbon atoms; X represents a fluorine atom-substituted hydrocarbon group having 1 to 10 carbon atoms; and A represents an alkylene group having 2 to 4 carbon atoms. Furthermore, n is a whole number from 1 to 30.)

2. The non-aqueous electrolytic solution of claim 1, wherein the fluorine-containing ether compound is a compound represented by the aforesaid formula (1) or (2) in which R and X have 1 to 3 carbon atoms, A has 2 carbon atoms, and n is 1.

3. A non-aqueous electrolytic solution comprising a non-aqueous solvent containing a fluorine-containing ether compound represented by the following general formula (1) or (2), and an electrolyte:
RO-(AO)ₙ-CH₂-X (1)
X-CH₂-(AO)ₙ-CH₂-X (2)
(In formulas (1) and (2), R represents a hydrocarbon group having 1 to 20 carbon atoms; X represents a fluorine atom-substituted hydrocarbon group having 1 to 10 carbon atoms; A represents an alkylene group having 2 to 4 carbon atoms, and n is a whole number of 1 to 30. Furthermore, in formula (1), when X is CF₃ and R is CH₃, C₂H₆ or CH(CH₃)₂, A is an alkylene group having 3 or 4 carbon atoms.)

4. The non-aqueous electrolytic solution of any one of claims 1 to 3, wherein the fluorine-containing ether compound content of the non-aqueous electrolytic solution is not less than 0.1 wt% but not more than 70 wt%.

5. The non-aqueous electrolytic solution of any one of claims 1 to 4, wherein the aforesaid carbonic acid ester is cyclic carbonic add ester having 2 to 5 carbon atoms and/or chain carbonic acid ester having 1 to 5 carbon atoms..

6. The non-aqueous electrolytic solution of any one of claims 1 to 5, wherein the electrolyte is at least one selected from the group of LiPF₆, LiBF₄, LiOSO₂R¹, LiN(SO₂R²)(SO₂R³), LiC(SO₂R⁴)(SO₂R⁵)(SO₂R⁶) and LiN(SO₂OCH₂R⁷)(SO₂OCH₂R⁸) (wherein R¹ to R⁸, which may be equal or different, are perfluoroalkyl groups having 1 to 6 carbon atoms).

7. A non-aqueous electrolytic solution secondary battery comprising a non-aqueous electrolytic solution as defined in any of claims 1 to 6, a negative electrode which contains any of metal lithium, lithium-containing alloy, carbon material capable of doping or dedoping lithium ions, tin oxide capable of doping or dedoping lithium ions, silicon capable of doping or dedoping lithium ions and titanium oxide capable of doping or dedoping lithium ions as the active negative electrode material, and a positive electrode which contains a complex oxide of lithium and transition metal as the active positive electrode material.
